## Europäisches Patentamt
## European Patent Office
## Office européen des brevets

(11) Veröffentlichungsnummer: **0 102 606**
**B1**

(12)

# EUROPÄISCHE PATENTSCHRIFT

(45) Veröffentlichungstag der Patentschrift:
14.01.87

(51) Int. Cl.⁴: **C 09 D 3/80, C 08 L 33/06**

(21) Anmeldenummer: 83108491.8

(22) Anmeldetag: 29.08.83

(54) Wärmehärtende oder lufttrocknende Lackbindemittel.

(30) Priorität: 07.09.82 DE 3233171

(43) Veröffentlichungstag der Anmeldung:
14.03.84 Patentblatt 84/11

(45) Bekanntmachung des Hinweises auf die Patenterteilung:
14.01.87 Patentblatt 87/3

(84) Benannte Vertragsstaaten:
AT DE FR GB IT NL SE

(56) Entgegenhaltungen:
EP-A-0 011 760
EP-A-0 065 237
US-A-3 997 485

(73) Patentinhaber: BAYER AG, Konzernverwaltung RP Patentabteilung, D-5090 Leverkusen 1 Bayerwerk (DE)

(72) Erfinder: Höhlein, Peter, Dr., Windmühlenweg 3e, D-4152 Kempen 3 (DE)
Erfinder: Schoeps, Jochen, Dr., Windmühlenstrasse 128, D-4150 Krefeld (DE)
Erfinder: Beer, Wolfgang, Dr., Heyenfeldweg 132, D-4150 Krefeld (DE)

EP 0 102 606 B1

# 0 102 606

## Beschreibung

Die Erfindung betrifft wärmehärtende oder lufttrocknende Lackbindemittel auf Basis von Copolymerisaten aus copolymerisierten Einheiten von (Meth)Acrylsäureestern, $\alpha,\beta$-ungesättigten Carbonsäuren, N-.Methylol(meth)acrylsäureamiden, gegebenenfalls verethert, Vinyltrialkylsilanen, Umsetzungsprodukten aus Alkylglycidether und Monocarbonsäure sowie gegebenenfalls Vinyl- und/oder Vinylidenaromaten und Hydroxyalkyl(meth)acrylaten bzw. Glycidyl(meth)acrylat, die nach Neutralisation der Carboxylgruppen als wasserverdünnbare Lackbindemittel weiterverarbeitet werden können. Insbesondere in Kombination mit Aminoplastharzen können die Copolymerisate als Lackbindemittel zur Herstellung von überzügen eingesetzt werden, die neben großer mechanischer Belastbarkeit und Verseifungsstabilität, auch im alkalischen Medium, hohe Glanzwerte und Wetterstabilität aufweisen.

Aus der japanischen Patentanmeldung 68/51845 der Asahi Chemical Industry Co. (Priorität 24.07.1968), veröffentlicht am 08.11.1973 unter 73/36922, ist bekannt, Copolymerisate aus copolymerisierten Einheiten von Styrol, Butylacrylat, Hydroxyethylmethacrylat, Acrylsäure und Vinyltriethoxysilan herzustellen, das Copolymerisat nach Abmischung mit veretherten Methylolmelaminharzen mit Triethylamin zu neutralisieren und als Zusammensetzung für die elektrophoretische Beschichtung einzusetzen. Diese Bindemittel sind für den Einsatz als waschlaugenbeständiges Beschichtungsmaterial ungeeignet, da sie nicht die erforderliche Laugenbeständigkeit aufweisen.

Weiterhin ist in der älteren eurcpäischen Patentanmedung Nr. 82.103 364.1, Veröffentl.-Nr. CC65237 vorgeshlagen worden, Mischpolymerisate as z.B. Styrol, Butylacrylat, N-Methoxmethyl (meth)acrylsäureamid, Acrylsäure und dem Umsetzungsprodukt aus Allylglycidylether mit Monocarbonsäuren herzustellen, die nach Neutralisation der Carboxylgruppen als wasserverdünnbare Lackbindemittel appliziert werden können, dabei verseifungsstabil lagerfähig sind und nach dem Erwärmen mit Melaminharz zu waschlaugenfesten Beschichtungen ausgehärtet werden können.

Aufgabe der vorliegenden Erfindung war die Bereitstellung umweltfreundlicher Lackbindemittel, die für die Herstellung wasserverdünnbarer, festkörperreicher Überzugsmittel mit extrem hoher verseifungsstabiler Lagerfähigkeit in Gegenwart alkalischer Verbindungen geeignet sind, die ferner im vernetzten Zustand extrem waschlaugenfeste, hochglänzende Filme mit ausgezeichneten mechanischen Eigenschaften ergeben und deren Bewitterungsverhalten ein so hohes Niveau besitzt, daß diese Bindemittel z.B. für den Einsatz als äußerste Schutzschicht sowohl in pigmentierter als auch in nichtpigmentierter Form (z.B. für Zweischichtmetalliclackierungen) einsetzber sind.

Die Aufgabe wurde durch die erfindungsgemäßen Zusammensetzungen der Bindemittel gelöst.

Gegenstand der Erfindung sind wärmehärtende oder lufttrocknende Lackbindemittel auf Basis von Mischungen von 50 - 95 Gew.-%, vorzugsweise 55-85 Gew.-% eines Copolymerisats aus copolymerisierten Einheiten von Vinyl- und/oder Vinylidenmonomeren sowie Vinyltrialkoxysilan und 5-50 Gew.-%, vorzugsweise 15-45 Gew.-% üblichen Vernetzungsmitteln und gegebenenfalls gesättigten Lactamen, dadurch gekennzeichnet, daß das Copolymerisat aus copolymerisierbaren Einheiten von

a. 0 - 65 Gew.-% mindestens eines Vinyl- oder Isopropenylaromaten mit 8 - 14 Kohlenstoffatomen oder deren Mischungen,

b. 2 - 80 Gew.-% mindestens eines (Meth)Acrylsäurealkylesters mit 1 - 8 Kohlenstoffatomen,

c. 0,5 - 20 Gew.% mindestens einer $\alpha,\beta$-ungesättigten Mono- oder Dicarbonsäure mit 3-5 C-Atomen oder mindestens einem Halbester der vorgenannten Dicarbonsäuren mit 1 - 8 Kohlenstoffatomen in der Alkoholkomponente oder deren Mischungen,

d. 1 - 30 Gew.-% N-Methylol(meth)acrylsäureamid oder N-Methoxymethyl(meth)acrylsäureamid oder deren Mischungen,

e. 0,05 - 20 Gew.-% mindestens eines Vinyltrialkoxysilans mit 1 - 10 Kohlenstoffatomen in der Alkoxygruppe,

f. 0,1 - 40 Gew.-% mindestens eines Umsetzungsproduktes aus 1 Mol Allylglycidylether und 1 Mol mindestens einer aliphatischen, cycloaliphatischen, araliphatischen oder aromatischen Monocerbonsäure mit 2 - 30 Kohlenstoffatomen oder aus Zimtalkohol oder deren Mischungen und

g. 0 - 30 Gew.-% mindestens eines Hydroxyalkylesters der (Meth)Acrylsäure mit 2 - 8 Kohlenstoffatomen in der Alkylgruppe oder Glycidyl(meth)acrylat oder einem Umsetzungsprodukt aus einem Mol Glycidyl(meth)acrylat und 1 Mol der unter f. genannten Monocarbonsäuren oder Mischungen der vorgenannten Monomeren aufgebaut ist, wobei die Summe der prozentgehalte a. bis g. 100 beträgt.

Enthält das Copolymerisat Glycidylgruppen, so können diese mit den unter f. angegebenen Monocarbonsäuren im äquivalenten Gewichtsverhältnis umgesetzt werden.

Namentlich seien folgende Monomeren der Gruppen a - g beispielsweise genannt:

Gruppe a: Styrol, $\alpha$-Methylstyrol, o- bzw. p-Chlorstyrol, o-, m- oder p-Methylstyrol, p-tert.-Sutylstyrol und gegebenenfalls Mischungen derselben; bevorzugt ist Styrol;

Gruppe b: Methylacrylat, Ethylacrylat, n-bzw. iso-Propylacrylat, n-Butylacrylat, 2-Ethylhexyl-acrylat, Isooctylacrylat; tert.-Butylacrylat oder die entsprechenden Methacrylsäureester oder deren Mischungen; bevorzugt sind Acrylsäurealkylester mit 1 - 4 Kohlenstoffatomen in der Alkoholkomponente und Methylmethacrylat;

Gruppe c: Malein-, Fumar- und Itaconsäure; Methyl-, Ethyl-, n- und iso-Propyl-, n-Butyl-, tert.-Butyl-, 2-Ethylhexyl-, Cyclohexylhalbester der Maleinsäure, der Fumarsäure oder der Itaconsäure, vorzugsweise der Maleinsäure,; Acrylsäure, Methacrylsäure, Crotonsäure oder Mischungen der vorgenannten sauren Monomeren; bevorzugt sind Acrylsäure, Methacrylsäure und/oder Maleinsäurehalbester mit 4 - 8 C-Atomen in der Alkoholkomponente,;

Gruppe d: N-Methylolacrylsäureamid, N-Methylol-methacrylsäureamid, N-Methoxymethyl(meth)acrylamid, vorzugsweise N-Methoxymethylacrylamid;

Gruppe e: Vinyltrimethoxysilan, Vinyltriethoxysilan, Vinyltripropoxysilan, Vinyltributoxysilan, Vinyltri-2-ethylhexoxysilan, Vinyltrinonoxysilan, vorzugsweise Vinyltrimethoxysilan.

Gruppe f: Umsetzungsprodukte aus Allylglycidylether und Essigsäure, α-Ethylhexansäure, Isononansäure, Cyclohexanmonocarbonsäure, Benzoesäure, Stearinsäure, propionsäure, Buttersäure, Valeriansäure usw., insbesondere α-Ethylhexansäure und Isononansäure;

Gruppe g: 2-Hydroxyethyl(meth)-acrylat, 2-Hydroxypropyl-(meth)acrylat, 4-Hydroxybutyl(meth)acrylat, Trimethylolpropanmono(meth)acrylat, Pentaerythritmono(meth)acrylat, Glycidyl(meth)acrylat oder deren Mischungen; vorzugsweise 2-Hydroxy-ethyl(meth)acrylat oder 2-Hydroxypropyl(meth)-acrylat;

Vorzugsweise ist das Copolymerisat aus copolymerisierten Einheiten von

a. 0 - 50 Gew.-% mindestens eines Monomeren der Gruppe a.,

b. 20 - 72 Gew.% mindestens eines Monomeren der Gruppe b.,

c. 5 - 7 Gew.-% mindestens eines Monomeren der Gruppe c.,

d. 8 - 18 Gew.-% mindestens eines Monomeren der Gruppe d.,

e. 2 - 5 Gew.-% mindestens eines Monomeren der Gruppe e.,

f. 5 - 8 Gew.-% mindestens eines Monomeren der Gruppe f. und

g. 0 - 12 Gew.-% mindestens eines Monomeren der Gruppe g.

aufgebaut, wobei die Summe der prozentgehalte a - g 100 ist.

Bevorzugte Copolymerisate, die copolymerisierte Einheiten der Monomeren a - f enthalten, besitzen folgende prozentuale Zusammensetzung der Gruppen a - f:

a. 22 - 48 Gew.-%

b. 20 - 44 Gew.-%

c. 5 - 7 Gew.-%

d. 14 - 18 Gew.-%

e. 2 - 5 Gew.-%

f. 5 - 8 Gew.-%,

wobei pro Gruppe a - f jeweils mindestens ein Monomeres vorhanden ist.

Bevorzugte Copolymerisate, die copolymerisierte Einheiten der Monomeren b.-f. enthalten, besitzen folgende prozentuale Zusammensetzung der Gruppen b. - f.:

b. 64 - 70 Gew.-%

c. 5 - 7 Gew.-%

d. 14 - 18 Gew.-%

e. 2 - 5 Gew.-%

f. 5 - 8 Gew.-%,

wobei pro Gruppe b. - f. jeweils mindestens ein Monomeres vorhanden ist.

Bevorzugte Copolymerisate, die copolymerisierte Einheiten der Monomeren a - g enthalten, besitzen folgende prozentuale Zusammensetzung der Gruppen a. - g.:

a. 19 - 25 Gew.-%

b. 38 - 44 Gew.-%

c. 5 - 7 Gew.-%

d. 9 - 11 Gew.-%

e. 2 - 5 Gew.-%

f. 5 - 8 Gew.-%

g. 10 - 12 Gew.-%,

wobei pro Gruppe - jeweils mindestens ein Monomeres vornanden

Die Herstellung der Copolymerisate kann durch Copolymerisation der Monomeren a. - g. nach üblichen Verfahren erfolgen, wobei der radikalischen Polymerisation in der Schmelze bzw. in Lösung der Vorzug gegeben wird. Die Polymerisation kann bei Temperaturen von 70 - 160°C, vorzugsweise 100 - 150°C, durchgeführt werden.

Die Monomeren a. - g. werden im wesentlichen in den gleichen Verhältnissen, wie sie zur Polymerisation eingesetzt sind, in das Copolymerisatharz eingebaut, wobei die einpolymerisierten Einheiten im wesentlichen statistisch verteilt sind.

Bevorzugte Initiatoren zur Durchführung der radikalischen polymerisation sind z.B. symmetrische, aliphatische Azo-Verbindungen, wie: Azo-bis-isobuttersäurenitril, Azo-bis-2-methyl-valeronitril, 1,1'-Azo-bis-1-cyclohexannitril und 2,2'-Azo-bis-isobuttersäurealkylester; symmetrische Diacylperoxide, wie z.B. Acetyl-, Propionyl- oder Butyrylperoxid, Brom-, Nitro- Methyl- oder Methoxygruppen substituierte Benzoylperoxide sowie Lauroylperoxid; symmetrische Peroxydicarbonate, wie z.B. Diethyl-, Diisopropyl-, Dicyclohexyl- sowie Dibenzylperoxydicarbonat; tert.-Butylperoctoat oder tert.-Butylphenylperacetat sowie Peroxycarbonate wie tert.-Butyl-N-(phenylperoxy)-carbamat oder tert.-Butyl-N-(2,3-dichlor- oder -4-chlorphenyl-peroxy)carbamat. Weitere bevorzugte Peroxide sind: tert.-Butylhydroperoxid, Di-tert.-butylperoxid, Cumolhydroperoxid, Di-Cumolperoxid und tert.-Butylperpivalat.

Die Initiatoren können in Mengen von 0,2 - 20,0 Gew.-%, bezogen auf Gesamtmonomere, eingesetzt werden.

3

Ebenfalls können übliche Regler in Mengen von 0,1 - 15 Gew.-%, bezogen auf Gesamtmonomere, bei der Polymerisation eingesetzt werden.

Wird in Lösung polymerisiert, so können inerte Lösungsmittel wie z.B. Ethanol, Propanol, Isopropanol, n- oder iso-Butanol, Methylethylketon, Toluol, Xylol, Essigsäurebutylester, Butylglykol usw. verwendet werden.

Falls gewünscht, können zusätzlich zu den Lösungsmitteln auch gesättigte Lactame mitverwendet werden, deren Mengen, bezogen auf Copolymerisat, 50 Gew.-% nicht überschreiten soll. Im Lackbindemittel aus Copolymerisat und Vernetzer kann das gesättigte Lactam somit in Mengen bis zu 50 Gew.-%, bezogen auf Copolymerisat, vorhanden sein. Das Lactam kann auch nach der Polymerisation dem Copolymerisat zugesetzt werden.

Da die eingesetzten Lactame gesättigt sind, reagieren sie mit den Monomeren nicht unter Copolymerisation, sondern setzen sich über ihre reaktive NH-Gruppe mit einem Vernetzungsmittel um. Die eingesetzten Lactame sind im wesentlichen nicht flüchtig und verbleiben daher beim Härten im Film.

Bevorzugte Lactame sind 1-N-Methyl-hexahydro-1,4-diaze-pion-3,$\omega$ -Dodecyllactam,$\gamma$ -Butyrolactam, $\delta$ -Valerolactam, insbesondere $\varepsilon$ -Caprolactam.

Die Copolymerisate können im Anschluß an ihre Herstellung bei Temperaturen von 140 - 200°C von flüchtigen Bestandteilen befreit werden. Dies kann z.B. entweder unter Normaldruck in Schlangenrohrverdampfern durch Einblasen eines Inertgases wie Stickstoff oder Wasserdampf in Mengen von 0,1 bis 1 m$^2$ auf 1 kg Harzschmelze oder im Vakuum in Ausdampfapparaturen wie Fallfilmverdampfern, Dünnschichtverdampfern, Schneckenverdampfern, Entspannungsverdampfern oder Sprühverdampfern erfolgen.

Die mittleren Molekulargewichte und die molekularen Uneinheitlichkeiten der Copolymerisatharze wurden mit Hilfe der Gelpermeationschromatographie (GPC) an Styragelen mit Tetrahydrofuran als Elutionsmittel bestimmt. Dabei werden nach Erstellung einer universellen Eichbeziehung (nach Z. Grubisic, p. Rempp und H. Benoit, J. Polym. Sci. part B, Polymer Letters 5 (1967) 754) aus der Verteilung der Chromatogramme die Molekulargewichtsmittelwerte $\bar{M}w$ und $\bar{M}n$ bestimmt. Die Polymerisate besitzen mittlere Molekulargewichte von $\bar{M}n$ = 2000 bis 50 000, vorzugsweise $\bar{M}n$ 2000 bis 15 000, und molekulare Uneinheitlichkeiten U (U = $\bar{M}w/\bar{M}n - 1$; $\bar{M}w$ = Gewichtsmittel, $\bar{M}n$ = Zahlenmittel des Molekulargewichtes) von 0,5 - 200.

Enthält das Copolymerisat eingebaute Glycidylgruppen, so kann es durch Umsetzung mit Fettsäuren modifiziert werden, wobei im Falle von ungesättigten Fettsäuren lufttrocknende Bindemittel erhalten werden können.

Die Copolymerisate der Erfindung werden mit 5-50 Gew.-%, vorzugsweise 15 - 45 Gew.-%, bezogen auf Summe der Prozentgehalte aus Copolymerisat und Aminoplast, zum Erzielen optimaler lacktechnischer Eigenschaften mit Aminoplastharzen unter Wärmeeinwirkung, gegebenenfalls unter Zusatz üblicher Katalysatoren, vernetzt.

Oftmals werden aber schon ausreichende mechanische Eigenschaften unter Lufttrocknungsbedingungen erzielt.

Falls gewünscht, können die erfindungsgemäßen Lackbindemittel (= Copolymerisat und Vernetzer wie Aminoplastharz) aus rein organischer Lösung appliziert werden.

Als Beispiel für geeignete Aminoplastharze seien Aldehydkondensationsprodukte wie Melamin, Harnstoff und Benzoguanamin genannt. Im allgemeinen wird als Aldehyd Formaldehyd verwendet, obwohl brauchbare Produkte auch mit anderen Aldehyden, wie Acetaldehyd, Crotonaldehyd, Acrolein, Benzaldehyd und Furfurylaldehyd erhalten werden. Die Methylolgruppen der Aminoplaste können mit gesättigten aliphatischen Monoalkoholen mit 1 - 4 C-Atomen veräthert sein. Melamin- und Harnstoffharze sind bevorzugt.

Besonders bevorzugt sind Melamin- Formaldehyd-Kondensationsprodukte, die nicht veräthert oder mit gesättigten Monoalkoholen mit 1 - 4 C-Atomen veräthert sind (vgl. französische patentschrift 543 411 oder D.H. Salomon, The Chemistry of Organic Filmformers, 235-240, John Wiley & Sons, Inc., New York, 1967).

Im Anschluß an die Herstellung des Copolymerisats können die im Copolymerisat enthaltenen Carboxylgruppen in einer bevorzugten Ausführungsform teilweise oder vollständig neutralisiert werdeh. Die Neutralisation kann in An- oder Abwesenheit des Lactams und ggf. weiterer konventioneller Lösungsmittel und in An- oder Abwesenheit des Aminoplastharzes erfolgen. Der Neutralisationsgrad liegt bevorzugt bei 30 - 100 %, d.h. von 1 Gramm-Äquivalent Carboxylgruppen werden 0,3 bis 1 Gramm-Äquivalente neutralisiert. Dies ergibt einen pH-Wert des wäßrigen Überzugsmittels zwischen 5 und 10. Vorzugsweise liegt der pH-Wert des wäßrigen Überzugsmittels bei 7 bis 5.

Als Neutralisationsmittel können Ammoniak, Mono- und Polyamine eingesetzt werden. Namentlich seien beispielsweise genannt: Ammoniak, Ethylamin, Diethylamin, Triethylamin, Trimethylamin, Mono-, Di- oder Triethanolamin, Dimethylethanolamin usw.

Erfindungsgemäße Bindemittel aus dem Copolymerisat mit teilweise oder vollständig neutralisierten Carboxylgruppen und Aminoplast sind mit Wasser verdünnbar, was in Gegenwart von organischen Lösungsmitteln erfolgen kann.

Geeignete organische Lösungsmittel sind beispielsweise Alkohole mit 1 - 4 C-Atomen wie Methanol, Ethanol, n- und iso-Propanol, Butanole; Essigsäureester mit 1 - 4 C-Atomen in der Alkoholkomponente, wie Essigsäureethyl- und -butylester oder Ethylglykolacetat, Ethylenglykol-mono-alkylether mit 1 - 4 C-Atomen im Alkylrest wie Ethylenglykolmonomethyl-, -ethyl und -butylether; aliphatische und alicyclische Ketone wie Methylethylketon, Methylisobutylketon, Cyclohexanon, Aceton, niedere Ether, wie Tetrahydrofuran oder Gemische der genannten Lösungsmittel.

4

Obwohl die bevorzugte Art der Vernetzung der erfindungsgemäßen Bindemittel die Umsetzung mit Aminoplastharzen ist, können sie auch mit anderen Vernetzungskomponenten zu Lackfilmen mit gutem Eigenschaftsniveau ausgehärtet werden. Hierzu zahlen Epoxyverbindungen, Polyisocyanate, Phenoplaste wie Resolharze und andere mit den reaktiven Gruppen der erfindungsgemäßen Bindemittel zur Vernetzung befähigte Vernetzungsmittel.

Die aus den erfindungsgemäßen Bindemitteln nach Verdünnung mit Wasser, ggf. in Gegenwart organischer Lösungsmittel, erhaltenen wäßrigen Einbrennlacke (Überzugsmittel) konnen Weißpigmente, insbesondere Titandioxid, in Mengen von 20 - 200 Gew.-%, bezogen auf Bindemittel, enthalten. Daruber hinaus können noch anorganische oder organische Buntpigmente in Mengen von bis zu 90 Gew.-% sowie Füllstoffe in Mengen von ebenfalls von bis zu 90 Gew.-%, Verlaufsmittel bis zu 10 Gew.-%, Wachse zur Erhöhung der Kratzfestigkeit bis zu 10 Gew.-% und übliche Härtungskatalysatoren bis zu 1 Gew.-%, jeweils bezogen auf Bindemittel, im Überzugsmittel enthalten sein.

Die in dieser Weise hergestellten Überzugsmittel können unter Verwendung der üblichen Verfahren aufgetragen werden, z.B. durch Umkehrwalzenbeschichter, Sprühen, Streichen und Tauchen oder ähnliche Arbeitsweisen.

Als zu überziehende bzw. zu beschichtende Substrate kommen Metalle, Glas, Kunststoffe, keramische Materialien, vorzugsweise Metalle, in Frage.

Die Härtung der Einbrennlacke erfolgt im allgemeinen bei Temperaturen von 80 - 250 °C. Es ist manchmal vorteilhaft, die Härtung zunachst bei Temperaturen unter 120°C zu beginnen und bei Temperaturen über 120 °C zu vervollständigen.

Die mit den erfindungsgemäßen Bindemitteln hergestellten Überzugsmittel ergeben nach ihrer Härtung Überzüge mit ausgezelchneten anwendungstechnischen Daten und von extrem hoher Chemikalien- und Witterungsbestandigkeit. Insbesondere können Haushaltsgeräte mit metallischen Oberflächen, wie Spulmaschinen, Waschmaschinen und Kuhlschränke, mit den aus den erfindungsgemäßen Bindemitteln erhaltenen wäßrigen Einbrennlacken lackiert werden, da die Überzüge eine besonders hohe Waschlaugenbeständigkeit und Lösungsmittelbeständigkeit, Hochglanz und ausgezeichnete Oberflächenhärte aufweisen.

Andererseits sind diese Bindemittel wegen ihres Hochglanzes und dem ausgezeichneten Bewitterungsverhalten für die Beschichtung von Gegenständen, die dem Wetter ausgesetzt sind, hervorragend geeignet. Hierzu zählen neben Fassadenelementen auch alle Arten von Transportmitteln, insbesondere Automobile, Bahnwaggons, Flugzeuge, Container und Schiffe.

Die in den Beispielen angegebenen Teile und prozentzahlen beziehen sich auf das Gewicht, sofern nichts anderes vermerkt ist.

**Beispiel 1**

In einem mit Rückflußkühler, Heiz-, Kühl- und Dosiervorrichtung versehenen Glasgefäß werden 1029 g Ethylglykol vorgelegt und auf 110°C erhitzt. Im Verlauf von 3 h wird dann bei 100°C eine Mischung aus 120 g des Additionsproduktes aus Allylglycidylether mit α-Ethylhexansäure (Molverhältnis 1:1), 353 g n-Butylacrylat, 805 g Styrol, 104 g Acrylsäure, 282 g N-Methoxymethylacrylsäureamid, 60 g Vinyltrimethoxysilan und 10 g Mercaptoethanol zudosiert. Gleichzeitig wird innerhalb eines Zeitraumes von 4 h eine Mischung aus 66 g tert.-Butylperoctoat und 171 g Ethylglykol zugetropft. Anschließend wird 2 h bei 110°C nachgerührt. Nach dem Abdrücken über ein Filter resultiert ein Harz mit einer Säurezahl von 27, (mg KOH/g Substanz), gemessen in der Lösung, einer Viskosität von 15 500 mPa.s und einem Festgehalt von ca. 59,8 %. Die Viskosität wurde, wie auch in allen nachfolgenden Beispielen stets im Höppler-Viskosimeter bei t = 20° C gemessen.

Das Copolymerisat besteht aus copolymerisierten Einheiten von 6,96 % des Additionsproduktes aus Allylglycidylether mit α-Ethylhexansäure, 20,5 % n-Butylacrylat, 46,70 % Styrol, 6,00 % Acrylsäure, 16,36 % N-Methoxymethylacrylsäureamid und 3,48 % Vinyltrimethoxysilan.

Das Copolymerisat bestitzt ein mittleres Molekulargewicht $\bar{M}n$ von 4536 und eine molekulare Uneinheitlichkeit U von 1,30.

**Vergleichsversuch 1 (ohne copolymerisiertes Vinyltri methoxysilan)**

In einem mit Rückflußkühler, Heiz-, Kühl- und Dosiervorrichtung versehenen Glasgefäß werden 1029 g Ethylglykol vorgelegt und auf 110°C erhitzt. Im Verlauf von 3 h werden bei 110°C eine Mischung aus 180 g des Additionsproduktes aus Allylgycidylether mit α-Ethylhexansäure, 353,4 g n-Butylacrylat, 804,6 g Styrol, 103,5 g Acrylsäure, 282,9 g N-Methoxymethylacrylsäureamid und 9,6 g Mercaptoethanol zudosiert. Gleichzeitig wird innerhalb eines Zeitraumes von 4 h eine Mischung aus 66,0 g tert.-Butylperoctoat und 171,0 g Ethylglykol zugetropft. Anschließend wird 2 h bei 110°C nachgerührt. Nach dem Abdrücken über ein Filter resultiert ein Harz mit einer Säurezahl von 26, gemessen in der Lösung, einer Viskosität von 2634 mPa.s und einem Festgehalt von ca. 53,5 %.

Das Copolymerisat besteht aus copolymerisierten Einheiten von 10,44 % des Additionsproduktes aus Allylglycidylether mit α-Ethylhexansäure, 20,5 % n-Butylacrylat, 46,66 % Styrol, 6,00 % Acrylsäure und 16,40 % N-Methoxymethylacrylsäureamid. Es besitzt ein mittleres Molekulargewicht $\bar{M}n$ von 5210 und eine molekulare Uneinheitlichkeit U von 1,47.

### Vergleichsversuch 2 gegenüber der Japanischen Patentanmeldung 68/51845

In einem mit Rückflußkühler, Heiz, Kühl- und Dosiervorrichtung versehenen Glasgefäß werden 1029 g Ethylglykol vorgelegt und auf 110°C erhitzt. Im Verlauf von 3 h werden dann bei 110°C eine Mischung aus 199 g 2-Hydroxyethyl-methacrylat, 849 g n-Butylacrylat, 522 g Styrol, 142 g Acrylsäure, 12 g Vinyltriethoxysilan und 10 g Mercaptoethanol zudosiert. Gleichzeitig wird innerhalb eines Zeitraumes von 4 h eine Mischung aus 66 g tert.-Butylperoctoat und 171 g Ethylglykol zugetropft. Anschließend wird 3 h bei 110°C nachgerührt. Nach dem Abdrücken über ein filter resultiert ein viskoses Harz, das einen Festgehalt von ca. 49,8 % und eine Viskosität von 1894 mPa.s bei einer Säurezahl von 39 besitzt.

Der Festgehalt wurde - wie in allen Beispielen und Vergleichsbeispielen - bestimmt, indem 1 g Harzlösung auf einem Metalldeckelchen von 7,5 cm Durchmesser in einer Schichtdicke von ca. 50 μm 1 h im Umlufttrockenschrank auf 80°C erhitzt wurde.

Das Copolymerisat selbst besteht aus copolymerisierten Einheiten von 11,54 % 2-Hydroxyethylmethacrylat, 49,24 % n-Butylacrylat, 30,29 % Styrol, 8,24 % Acrylsäure und 0,69 % Vinyltriethoxysilan.

Es besitzt ein mittleres Molgewicht $\bar{M}n$ von 2490 und eine molekulare Uneinheitlichkeit U von 1,83.

### Beispiel 2

Es wurde mit Ausnahme des Monomerengemisches wie in Beispiel 1 beschrieben verfahren. Die Monomerenmischung des Beispiels 2 setzt sich wie folgt zusammen: 120 g des Additionsproduktes aus Allylglycidylether mit α-Ethylhexansäure, 353 g 2-Ethylhexylacrylat, 805 g Styrol, 104 g Acrylsäure, 282 g N-Methoxymethylacrylsäureamid, 60 g Vinyltrimethoxysilan und 10 g Mercaptoethanol.

Es resultiert ein Harz mit einer Säurezahl von 28, gemessen in Lösung, einer Viskosität von 13 790 mPa.s und einem Festgehalt von ca. 59,9 %.

Das Copolymerisat selbst besteht aus copolymerisierten Einheiten von 6,96 % des Additionsproduktes Allylglycidylether mit α-Ethylhexansäure, 20,5 % 2-Ethylhexyl-acrylat, 46,70 % Styrol, 6,00 % Acrylsäure, 3,48 % Vinyltrimethoxysilan, und 16,36 % N-Methoxymethylacrylsäureamid.

Es besitzt ein mittleres Molekulargewicht $\bar{M}n$ von 3869 und eine molekulare Uneinheitlichkeit U von 2,16.

### Beispiel 3

Es wurde mit Ausnahme der Monomerenmischung wie in Beispiel 1 beschrieben verfahren. Als Monomerengemisch kam folgende Zusammensetzung zum Einsatz: 120 g des Additionsproduktes aus Allylglycidylether mit α-Ethylhexansäure, 60 g Vinyltrimethoxysilan, 353 g n-Butylacrylat, 805 g Methylmethacrylat, 104 g Acrylsäure, 282 g N-Methoxymethylacrylsäureamid und 10 g Mercaptoethanol. Es resultiert ein Harz mit einer Säurezahl von 28, gemessen in Lösung, einer Viskosität von 34 400 mPa.s und einem Festgehalt von ca. 59,6 %.

Das Copolymerisat selbst besteht aus copolymerisierten Einheiten von 6,96 % des Additionsproduktes aus Allylglycidylether mit α-Ethylhexansäure, 3,48 % Vinyltrimethoxysilan, 20,47 % n-Butylacrylat, 46,69 % Methylmethacrylat, 6,03 % Acrylsäure und 16,35 % N-Methoxymethylacrylsäureamid.

Es besitzt ein mittleres Molekulargewicht $\bar{M}n$ von 4541 und eine molekulare Uneinheitlichkeit U von 1,67.

### Beispiel 4

Es wurde mit Ausnahme der Monomerenmischung wie in Beispiel 1 beschrieben verfahren. Als Monomerengemisch kam folgende Zusammensetzung zum Einsatz: 120 g des Additionsproduktes aus Allylglycidylether mit α -Ethylhexansäure, 743 g n-Butylacrylat, 60 g Vinyltrimethoxysilan, 415 g Styrol, 104 g Acrylsäure, 180 g N-Methoxymethylacrylsäureamid, 202 g Hydroxyethylmethacrylat und 10 g Mercaptoethanol.

Es resultiert ein Harz mit einer Säurezahl von 28, gemessen in Lösung, einer Viskosität von 4779 mPa.s und einem Festgehalt von ca. 59,4 %.

Das Copolymerisat selbst besteht aus copolymerisierten Einheiten von 6,58 % des Additionsproduktes aus Allylglycidylether mit α-Ethylhexansäure, 40,73 % n-Butylacrylat, 11,08 % Hydroxyethylmethacrylat, 3,29 % Vinyltrimethoxysilan, 22,75 % Styrol, 5,70 % Acrylsäure und 9,87 % N-Methoxymethylacrylsäureamid. Es besitzt ein mittleres Molekulargewicht M̄n von 3268 und eine molekulare Uneinheitlichkeit von 1,55.

**Beispiel 5**

Es wurde mit Ausnahme der Monomerenmischung wie in Beispiel 1 beschrieben verfahren. Als Monomerengemisch kann folgende Zusammensetzung zum Einsatz: 120 g des Additionsproduktes aus Allylglycidylether mit α-Ethylhexansäure, 60 g Vinyltrimethoxysilan, 353 g 2-Ethylhexyl-acrylat, 805 g Methylmethacrylat, 104 g Acrylsäure, 282 g N-Methoxymethylacrylsäureamid und 10 g Mercaptoethanol. Es resultiert ein Harz mit einer Säurezahl von 28, gemessen in Lösung, einer Viskosität von 44 200 mPa.s und einem Festgehalt von ca. 60,3 %.

Das Copolymerisat selbst besteht aus copolymerisierten Einheiten von 6,96 % des Additionsproduktes aus Allylglycidylether mit α-Ethylhexansäure, 3,48 % Vinyltrimethoxysilan, 20,47 % 2-Ethylhexylacrylat, 46,69 % Methylmethacrylat, 6,03 % Acrylsäure und 16,36 % N-Methoxymethylacrylsäureamid.

Es besitzt ein mittleres Molekulargewicht M̄n von 6340 und eine molekulare Uneinheitlichkeit U von 3,59.

**Beispiel 6**

Es wurde mit Ausnahme der Monomerenmischung wie in Beispiel 1 beschrieben verfahren. Als Monomerengemisch kam folgende Zusammensetzung zum Einsatz: 120 g Zimtalkohol, 60 g Vinyltrimethoxysilan, 353 g 2-Ethylhexylacrylat, 805 g Styrol, 104 g Acrylsäure, 282 g N-Methoxymethylacrylsäureamid und 10 g Mercaptoethanol. Es resultiert ein Harz mit einer Säurezahl von 27, gemessen in Lösung, einer Viskosität von 13 455 mPa.s und einem Festgehalt von ca. 59,2 %.

Das Copolymerisat selbst besteht aus copolymerisierten Einheiten von 6,96 % Zimtalkohol, 20,50 % 2-Ethylhexylacrylat, 3,48 % Vinyltrimethoxysilan, 46,66 % Styrol, 6,00 % Acrylsäure und 16,40 % N-Methoxymethylacrylsäureamid.

Es besitzt ein mittleres Molekulargewicht M̄n von 5352 und eine molekulare Uneinheitlichkeit von 2,56.

**Beispiel 7**

Es wurde mit Ausnahme der Monomerenmischung wie im Beispiel 1 beschrieben verfahren. Als Monomerengemisch kam folgende Zusammensetzung zum Einsatz: 120 g des Additionsproduktes aus Allylglycidylether mit α-Ethylhexansäure, 353 g n-Butylacrylat, 60 g Vinyltriethoxysilan, 805 g Styrol; 104 g Acrylsäure, 282 g N-Methoxymethylacrylsäureamid und 10 g Mercaptoethanol. Es resultiert ein Harz mit einer Säurezahl von 27, gemessen in Lösung, einer Viskosität von 16 320 mPa.s und einem Festgehalt von ca. 59,7 %.

Das Copolymerisat selbst besteht aus copolymerisierten Einheiten von 6,96 % des Additionsproduktes Allylglycidylether mit α-Ethylhexansäure, 20,5 % n-Butylacrylat, 3,48 % Vinyltriethoxysilan, 46,70 % Styrol, 6,00 % Acrylsäure und 16,36 % N-Methoxymethylacrylsäureamid.

Es besitzt ein mittleres Molekulargewicht M̄n von 5243 und eine molekulare Uneinheitlichkeit U von 1,54.

**Herstellen eines Weißlackes und eines daraus hergestellten Lackfilms**

100 Teile der vorstehend beschriebenen Copolymerisate (Beispiele 1 - 7 und Vergleichsversuche 1 und 2) werden mit 4,34 Teilen Dimethylethanolamin neutralisiert und aus je 7,84 Teilen der neutralisierten Copolymerisate werden unter Zusatz von 27,12 Teilen Titandioxid vom Rutiltyp und 15,46 Teilen Wasser Mahlgutformulierungen for die Perlmühlenanreibung hergestellt.

|  | in Teilen |
|---|---|
| Mahlgut mit den neutralisierten Copolymerisaten der Beispiele 1-7 bzw. Vergleich 1 und 2 | 50,42 |
| Copolymerisat aus Beispielen 1-7 bzw. aus Vergleich 1 und 2 (nicht neutralisiert) | 34,52 |
| Hexamethoxymethylmelamin | 4,54 |
| p-Toluolsulfonsäure, 10 %ig in IPA[1] | 0,54 |
| handelsübliches Verlaufsmittel | 0,30 |
| Wasser | 9,68 |
|  | 100,00 |

Einstellen auf Spritzviskosität = 51 s

im 4-mm-Becher (DIN 43 211)

mit Butylglycol/Wasser 1:1          28,5

[1] IPA = Isopropylalkohol

Die aus den Mahlgutformulierungen mit den neutralisierten Copolymerisatharzen der Beispiele 1-7 und der Vergleiche 1 und 2 sowie mit den nicht neutralisierten Copolymerisaten der Beispiele 1-7 und der Vergleiche 1 und 2 hergestellten Überzugsmittel werden als Weißlacke 1-7 und Vergleich 1,2 bezeichnet.

Der jeweils erhaltene Weißlack wurde auf zinkphosphatierte Stahlbleche durch Spritzen appliziert (Trockenfilm-Schichtdicke ca. 25 - 30 μm) und 10 min. bei 180°C im Umlufttrockenschrank eingebrannt.

**Test der Waschlaugenbeständigkeit**

Die lackierten Prüfbleche (Dicke der Filme 30 μm, eingebrannt 10 min. bei 180 °C, (anschließend 3 Wochen bei Raumtemperatur gelagert) wurden über einen Zeitraum von 4 h bei 95°C in eine 0,2 %ige wäßrige Lösung eines handelsüblichen Waschmittels auf Basis von Pentanatriumtripolyphosphat, Natriummetasilikat, Soda, oxyethyliertem Nonylphenol (10 Ethylenoxideinheiten/Mol Phenol) und Cyanursäurechlorid gegeben.

Nach dem Abspülen mit kaltem Wasser werden diese Bleche nochmals über 4 h einer 3%igen Lösung des oben angegebenen Waschmittels bei 95°C ausgesetzt. Waschlaugenbeständigkeit wird attestiert, wenn dieser Testzyklus (insgesamt 480 min) zweimal ohne Blasenbildung oder Mattwerden der Lackfilme durchlaufen wird.

In der nachfolgenden Tabelle 1 sind unter A. die Säurezahlen (mg KOH/g Substanz) und die Viskositäten der Copolymerisate gemäß den Beispielen 1-7 und den Vergleichsversuchen 1 und 2 noch einmal angegeben. Die Viskositäten wurden im Höppler-Viskosimeter bei einer Temperatur von t = 20 °C gemessen. Unter B sind die Glanzwerte von Filmen der vorstehend beschriebenen Weißlacke 1-7 und der Vergleiche 1 und 2 und ihre Waschlaugenbeständigkeit gemäß vorstehendem Test angegeben.

**Tabelle 1 (Kennzahlen der Copolymerisate: Glanz und Waschlaugenbeständigkeit von Filmen der ausgehärteten Weißlacke)**

| Weißlack | 1 | Vergleich 1 | Vergleich 2 | 2 | 3 | 4 | 5 | 6 | 7 |
|---|---|---|---|---|---|---|---|---|---|
| A Kennzahlen | | | | | | | | | |
| Säurezahl des Copolymerisates (%) | 27 | 26 | 39 | 28 | 28 | 28 | 23 | 27 | 27 |
| Viskosität der Copolymerisate (mPa.s) | 15560 | 2634 | 1894 | 13700 | 34400 | 4779 | 44200 | 13445 | 16320 |
| B. Prüfungsergebnisse Glanz nach Gardner 20°C-Winkel (ASTM 523) | 79 | 50 | 88 | 72 | 63 | 84 | 67 | 74 | 78 |
| Wachlaugenbeständig-keitstest | (best.)* | (best.) | (nicht best.) | (best.) | (best.) | (best.) | (best.) | (best.) | (best.) |

*  (best.) = bestanden

Zur Prüfung der mechanischen Eigenschaften werden die Copolymerisate gemäß den Beispielen 1 bis 7 und des Vergleichsbeispiels 2 mit Dimethylethanolamin vollständig neutralisiert und nach folgender Rezeptur zu Weißlacken verarbeitet. Nach Applikation auf Prüfbleche durch Spritzauftrag werden die Weißlacke 1 bis 7 30 Minuten. bei 120°C eingebrannt.

```
                                        in Teilen

Copolymerisat in
neutralisierter Form
(Festgehalt 56,3 %)                      50,20

Aminoplastharz partiell methoxy-
liertes Melamin, 90 %ig in IPA            6,62

Titandioxid (Rutiltyp)                   27,12

handelsübliches Verlauf-
mittel                                    0,30

Wasser                                   15,76
                                        100,00


Gesamtbindemittel (Feststoffanteil):     34,22 %

Bindemittel/Aminoplastharz-Verhältnis:   82,6:17,4

Bindemittel/Pigment-Verhältnis:          1 : 0,8


Verdünnung zum Einstellen der Spritzviskosität:
        Butylglycol/Wasser = 1:1

Spritzviskosität (DIN 53 211, 4 mm-Becher: 51 sec.

Einbrennbedingungen : 30 Min. / 120°C.
```

Tabelle 2 faßt die ermittelten Werte von Filmen der ausgehärteten Weißlacke 1-7 und des Vergleichs 2, hergestellt mit den neutralisierten Copolymerisaten der Beispiele 1-7 und des Vergleichsbeispiels 2, hinsichtlich Vergilbung, Glanz, Härte, Haftfestigkeit und Dehnbarkeit zusammen.

**Tabelle 2 Mechanische Eigenschaften von bei 120° eingebrannten Filmen der Weißlacke 1—7 und des Vergleichs 2**

| Weißlacke | 1 | Vergleich 2 | 2 | 3 | 4 | 5 | 6 | 7 |
|---|---|---|---|---|---|---|---|---|
| Vergilbung (ELREPHO) | 81,6 | 86,1 | 81,6 | 81,2 | 80,2 | 80,1 | 80,3 | 81,3 |
| Glanz nach Gardner (%) 20°-Winkel (ASTM 523) | 85 | 85 | 90 | 77 | 84 | 77 | 91 | 87 |
| Pendelhärte nach (König (sec.) (DIN 53 157) | 166 | 92 | 151 | 156 | 156 | 149 | 162 | 158 |
| Haftfestigkeit (Gitterschnitt) (DIN 53 151) | 1/2 | 1/2 | 2/3 | 2 | 1/2 | 2 | 2/3 | 1/2 |
| Erichsentiefung (mm) (DIN 53 156) | 0,4 | 7,6 | 0,3 | 0,4 | 1,3 | 3,7 | 0,4 | 0,8 |

Die Prüfung der lufttrocknenden Eigenschaften erfolgte nach folgender Prüfrezeptur für das Beispiel 1 und das Vergleichsbeispiel 2

**in Teilen**

| | |
|---|---|
| Copolymerisat des Beispiels 1, bzw. des Vergleichsbeispiels 2, in neutralisierter Form (Festgehalt 56,3) | 48,19 |
| Titandioxid (Rutiltyp) | 27,12 |
| Trockenstoff Co-Octoat, 6% Co | 0,14 |
| handelsübliches Verlaufshilfsmittel | 0,30 |
| Wasser | 24,25 |
| | 100,00 |

Gesamtbindemittel (Feststoffanteile : 27,13 %

Bindemittel/Pigmentverhältnis        : 1 : 1

Verdünnung zum Einstellen der Viskosität:
        Butylglycol/Wasser = 1:1

Verarbeitungsviskosität (DIN 53 211, 4 mm-Becher):

80 + - 3 sec

Trocknungstemperatur:    20    °C

Trockenfilmdicke:    40 μm

**Tabelle 3 Prüfungsergebnisse nach Lufttrocknung**

| Weißlack | Verglechsbeispiel 2 | Beispiel 1 |
|---|---|---|
| *Trocknung:* | | |
| Stabtrocknung nach (h) | 2 | 2 |
| *Pendelhärte nach König (sec)* | | |
| nach 24 h | 25 | 68 |
| 48 h | 41 | 110 |
| 72 h | 26 | 88 |
| *Glanz nach Gardner (%)* | | |
| *20°-Winkel* | | |
| nach 24 h | 84 | 85 |
| 96 h | 82 | 82 |
| *Wasserlagerung* (15 Min.) | Lack löst sich ab | einige Bläschen an der Oberfläche |

**Patentansprüche:**

1. Wärmehärtende oder lufttrocknende Lackbindemittel auf Basis von Mischungen von 50 - 95 Gew.-% eines Copolymerisats aus copolymerisierten Einheiten von Vinyl- oder Vinylidenmonomeren oder deren Mischungen sowie mindestens einem Vinyltrialkoxysilan und 5-50 Gew.-% eines Vernetzungsmittels für das Copolymerisat und gegebenenfalls gesättigten Lactamen, dadurch gekennzeichnet, daß das Copolymerisat aus copolymerisierten Einheiten von

a. 0 - 65 Gew.-% mindestens eines Vinyl- oder Isopropenylaromaten mit 8 - 14 Kohlenstoffatomen oder deren Mischungen,

b. 2 - 80 Gew.-% mindestens eines (Meth)Acrylsäurealkylesters mit 1 - 8 Kohlenstoffatomen,

c. 0,5 - 20 Gew.-% mindestens einer α,β-ungesättigten Mono- oder Dicarbonsäure mit 3-5 C-Atomen oder mindestens eines Halbesters der vorgenannten Dicarbonsäuren mit 1 - 8 Kohlenstoffatomen in der Alkoholkomponente oder deren Mischungen,

d. 1 - 30 Gew.-% N-Methylol(meth)acrylsäureamid oder N-Methoxymethyl(meth)acrylsäureamid oder deren Mischungen,

e. 0,05 -20 Gew.-% mindestens eines Vinyltrialkyoxysilans mit 1-10 Kohlenstoffatomen in der Alkoxygruppe,

f. 0,1 - 40 Gew.-% mindestens eines Umsetzungsproduktes aus 1 Mol Allylglycidylether und 1 Mol mindestens einer aliphatischen, cycloaliphatischen, araliphatischen oder aromatischen Monocarbonsäure mit 2-30 Kohlenstoffatomen oder aus Zimtalkohol oder deren Mischungen und

g. 0- 30 Gew.-% mindestens eines Hydroxyalkylesters der (Meth)Acrylsäure mit 2-8 Kohlenstoffatomen in der Alkylgruppe oder Glycidyl(meth)acrylat oder eines Umsetzungsproduktes aus einem Mol Glycidyl(meth)acrylat und 1 Mol der unter f. genannten Monocarbonsäuren oder Mischungen der vorgenannten Monomeren aufgebaut ist, wobei die Summe der Prozentgehalte a. bis g. 100 beträgt.

2. Lackbindemittel gemäß Anspruch 1, dadurch gekennzeichnet, daß das Copolymerisat aus copolymerisierten Einheiten von

a. 0-50 Gew.-% mindestens eines Monomeren der Gruppe a.,

b. 20-72 Gew.-% mindestens eines Monomeren der Gruppe b.,

c. 5 - 7 Gew.-% mindestens eines Monomeren der Gruppe c.,

d. 8 - 18 Gew.-% mindestens eines Monomeren der Gruppe d.,

e. 2 - 5 Gew.-% mindestens eines Monomeren der Gruppe e.,

f. 5 - 8 Gew.-% mindestens eines Monomeren der Gruppe f. und

g. 0 - 12 Gew.-% mindestens eines Monomeren der Gruppe g.,

aufgebaut ist, wobei die Summe der Prozengehalte a - g 100 ist.

**Claims**

1. Heat-hardening or air-drying lacquer binders based on mixtures of 50 - 95% by weight of a copolymer of copolymerised units of vinyl or vinylidene monomers or mixtures thereof and at least one vinyl trialkoxysilane and 5-50% by weight of a cross-linking agent for the copolymer and optionally saturated lactams, characerised in that the copolymer,is composed of copolymerised units of

a. 0 - 65% by weight of at least one vinyl or isopropenyi aromatic with 8 - 14 carbon atoms or mixtures thereof,

b. 2 - 30% by weight of at least one (meth)acrylic acid alkyl ester with 1 to 8 carbon atoms,

c. 0.5 - 20% by weight of at least one α,β-unsaturated monoor dicarboxylic acid wich 3-5 C atoms or at least one semi-ester of the aforementionel dicarboxylic acids wich 1 - 8 carbon atoms in the alcohol component, or mixtures thereof,

d. 1 - 30% by weight of N-methylol-(meth)acrylic acid amide or N-methoxymethyl-(meth)acrylic acid amide, or mixtures thereof,

e. 0.05 - 20% by weight of at least one vinyl trialkoxysilane with 1 - 10 carbonatoms in the alkoxy group,

f. 0.1 - 40% by weight of at least one reaction product of 1 mol of allyl glycidyl ether and 1 mol of at least one aliphatic, cycloaliphatic, araliphatic or aromatic monocarboxylic acid with 2 - 30 carbon atoms or of cinnamyl alcohol or mixtures thereof and

g. 0 - 30% by weight of at least one hydroxyalkyl ester of (meth)acrylic acid with 2 - 8 carbon atoms in the alkyl group or glycidyl (meth)acrylate or a reaction product of one mol of glycidyl (meth)acrylate and 1 mol of the monocarboxylic acids mentioned under f. or mixtures of the aforementioned monomers, the sum of the percentage contents a. to g. being 100.

2. Lacquer binders according to Claim 1, characterised in that the copolymer is composed of cocolymerised units of

a. 0 - 50% by weight of at least one monomer of group a.,

b. 20 - 72% by weight of at least one monomer of group b.,

c. 5 - 7% by weight of at least one monomer of group c.,

d. 8 - 18% by weight of at least one monomer of group d.,

e. 2 - 5% by weight of at least one monomer of group e.,

f. 5 - 8% by weight of at least one monomer of group f and

g. 0 - 12% by weight of at least one monomer of group g.,

the sum of the percentage contents a - g being 100.


**Revendications**

1. Liants pour vernis durcissant à chaud et séchant à l'air, à base de mélanges de 50 à 95% en poids d'un produit de copolymérisation de motifs copolymérisés de monomères vinyliques ou vinylidéniques ou de leurs mélanges, ainsi que d'au moins un vinyltrialkoxysilane et de 5 à 50% en poids d'un agent de réticulation pour le produit de copolymérisation et, le cas échéant, de lactames saturés, caractérisés en ce que le produit de copolymérisation est formé de motifs copolymérisés

a. de 0 à 65% en poids d'au moins un composé aromatique vinylique ou isopropénylique ayant 8 à 14 atomes de carbone ou leurs mélanges,

b. de 2 à 80% en poids d'au moins un ester d'alkyle en $C_1$ à $C_8$ d'acide (méth)acrylique,

c. de 0,5 à 20% en poids d'au moins un acide monocarboxylique ou dicarboxylique à insaturation $\alpha$, $\beta$ ayant 3 à 5 atomes de carbone ou d'au moins un hémiester des acides dicarboxyliques mentionnés ci-dessus ayant 1 à 8 atomes de carbone dans le composant alcool, ou leurs mélanges,

d. de 1 à 30% en poids de N-méthylol(méth)acrylamide ou de N-méthoxyméthyl(méth)acrylamide ou leurs mélanges,

e. de 0,05 à 20% en poids d'au moins un vinyltrialkoxysilane ayant 1 à 10 atomes de carbone dans le groupe alkoxy,

f. de 0,7 à 40% en poids d'au moins un produit de réaction d'une mole d'éther d'alkyle et de glycidyle et d'une mole d'au moins un acide monocarboxylique aliphatique, cycloaliphatique, araliphatique ou aromatique ayant 2 à 30 atomes de carbone ou de l'alcool cinnamique ou leurs mélanges et

g. de 0.à 30% en poids d'au moins un ester hydroxyalkylique d'acide (méth)acrylique ayant 2 à 8 atomes de carbone dans le groupe alkyle ou de (méth)acrylate de glycidyle ou d'un produit de réaction d'une mole de (méth)acrylate de glycidyle et d'une mole des acides monocarboxyliques mentionnés en f. ou des mélanges des monomères indiqués ci-dessus, la somme des pourcentages de a. à g. s'élevant à 700.

2. Liants pour vernis suivant la revendication 1, caractérisés en ce que le produit de copolymérisation est formé de motifs copolymérisés de

a. 0 à 50% en poids d'au moins un monomère du groupe a.,

b. 20 à 72% en poids d'au moins un monomère du groupe b.,

c. 5 à 7% en poids d'au moins un monomère du groupe c.,

d. 8 à 18% en poids d'au moins un monomère du groupe d.,

e. 2 à 5% en poids d'au moins un monomère du groupe e.,

f. 5 à 8% en poids d'au moins un monomère du groupe f. et

g. 0 à 12% en poids d'au moins un monomère du groupe g., la somme des pourcentage de a. à g. étant égale à 100.